# EUROPEAN PATENT SPECIFICATION

(11) **EP 1 063 436 B1**
(45) Date of publication and mention of the grant of the patent: **23.11.2005**
(21) Application number: 00303482.4
(22) Date of filing: 26.04.2000
(51) Int. Cl.: F16C 17/04, F16C 33/10

(54) **Main shaft bearing lubricating apparatus for sealing-type reciprocating compressor**
Schmiervorrichtung für die Hauptwelle eines gekapselten Kolbenkompressors
Dispositif de lubrification de l'axe principal d'un compresseur à piston encapsulé

(30) Priority: 25.06.1999 KR 2428499
(43) Date of publication of application: 27.12.2000
(73) Proprietor: Samsung Kwangju Electronics Co., Ltd., Kwangju-city (KR)
(72) Inventor: Joo, Jae-Man, Suwon-City, Kyeogi-Do (KR)
(74) Representative: Chugg, David John

(56) References cited:
- WO-A-94/25768
- WO-A-97/34088
- DE-A- 3 714 536
- DE-U- 8 531 710
- US-A- 5 554 015

## Description

The present invention relates to a main shaft bearing lubricating apparatus for a sealing-type reciprocating compressor. More particularly, it relates to a main shaft bearing lubricating apparatus for a sealing-type reciprocating compressor that sufficiently provides a lubricating oil between a main shaft bearing and a thrust washer supporting a motor's rotor thereby preventing a metallic noise between the main shaft bearing and the rotor.

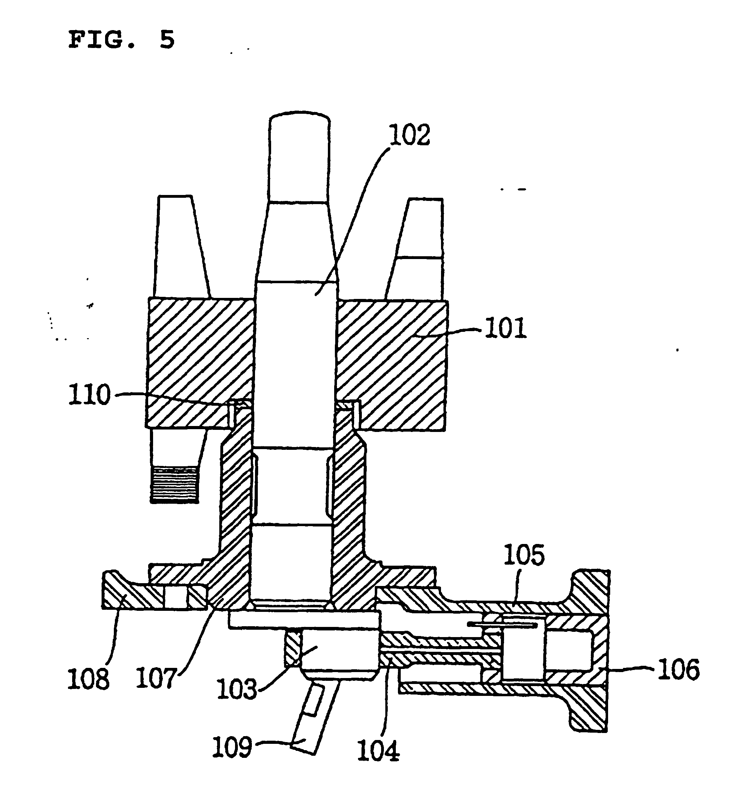

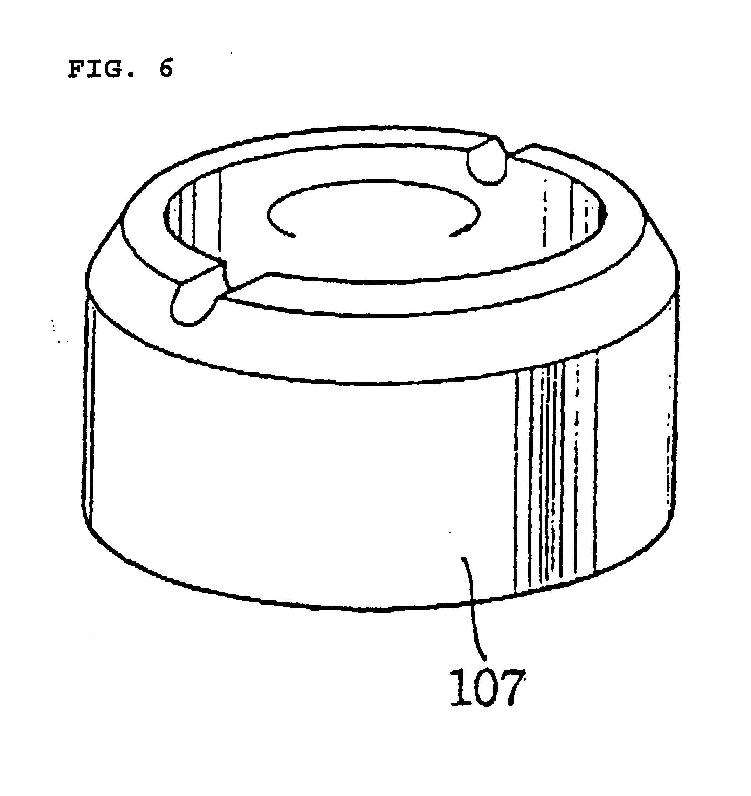

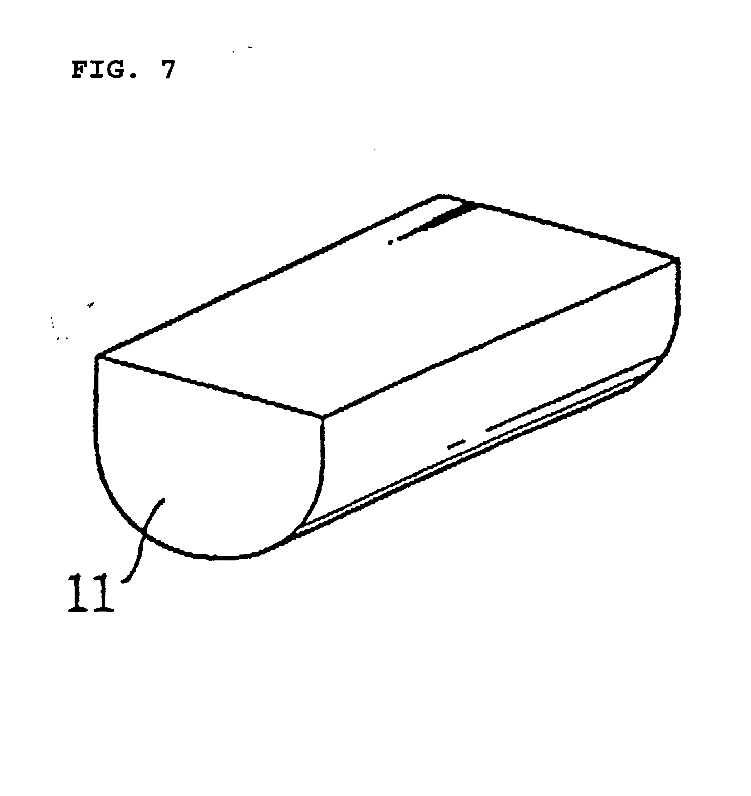

Compressors that are generally used in refrigerators, air conditioners, etc. are of sealing type in order to reduce noises. In such a compressor, as depicted in Figure 5, a rotary shaft 102 is tightly fit into a motor's rotor 101 and turns as rotor 101 rotates. A connecting rod 10 is connected to rotary shaft 102's lower end, and a piston rod 105 of a compression cylinder 104 is eccentrically connected to connecting rod 103. Accordingly, as rotor 101 rotates by the rotation of the motor, rotary shaft 102, fit into rotor 101, rotates, and piston rod 105, connected to connecting rod 10, reciprocates in response to the rotation of rotary shaft 102, thereby making a piston head 106 of a compression cylinder 104 reciprocate. As piston head 106 reciprocates, an evaporating refrigerant, introduced to compression cylinder 104, is compressed and condensed. This sealing-type compressor's main shaft bearing 107, supporting the motor's rotor 101, is coupled to a block 108 via a bolt, etc., and an oil pickup 109 is joined to rotary shaft 102's lower end, and transfers a lubricating oil, held in a lubricating oil storage shell (not shown), to various operating parts including compression cylinder 104, and finally to main shaft bearing 107 by centrifugal force produced by rotor 101's turning. A thrust washer 110 is interposed between main shaft bearing 107 and rotor 101, and rotates along with rotor 101 directly supporting rotor 101's load. At least one straight lubricating groove 111 is formed in the direction of semi-diameter on main shaft bearing 107's upper surface that contacts thrust washer 110, as shown in Figures 6 and 7.

The lubricating oil that is picked up by oil pickup 109 and reaches main shaft bearing 102's upper surface flows to the outside of main shaft bearing 102 through lubricating grooves 111 by the centrifugal force of thrust washer 110. As depicted in Figure 6, in the conventional compressor, since the lubricating oil, elevated through main shaft bearing 107, flows to the outside of main shaft bearing 107 before it completely approaches a contact surface between main shaft bearing 107's front section and thrust washer 110, the lubricating oil does not exist between main shaft bearing 107 and thrust washer 110, and does not provide the fluid lubricating characteristics.

Since the load of rotor 101 supported by main shaft bearing 107 is transmitted vertically downward, it is transferred to the upper surface of main shaft bearing 107 through thrust washer 110. That is, the weight of rotor 101 is sent to the upper surface of main shaft bearing 107 to cause friction. Since the lubricating oil is not sufficiently provided between main shaft bearing 107's upper surface and thrust washer 110's lower surface, a metallic friction is produced between main shaft bearing 107 and thrust washer 110, thus generating a frictional loss and abnormal noise of high frequency, and deteriorating the compressor quality.

Document WO-A-94/25768 discloses a main shaft bearing for a sealing-type reciprocating compressor, comprising a plurality of wide lubricating channels formed on the main shaft bearing's front section, each channel extending from an intake face disposed at a radially inner periphery of the front section to an outlet face disposed at a radially outer periphery thereof. Each lubricating channel may form a curved shape. Since each channel has a width substantially greater than its length, these channels cannot be considered as "grooves" in the sense used in the present application. Due to the large width of each channel the remaining contact faces between each channel are relatively small, meaning that the pressure on the contact surfaces in use is relatively high, thus increasing the oil pressure required to maintain the lubricating layer.

DE-A-3714536 discloses a system for lubricating bearings used for a refrigerant scroll compressor. In one arrangement the bearing surface of a thrust bearing has two oil grooves in a spiral form. Each of the oil grooves extends from the inner circumferential part to the outer circumferential part whilst each of the oil grooves circulates once in the bearing surface. In another arrangement the thrust bearing has a number of radial oil grooves which extend from the inner circumferential part to the outer circumferential part. Each of the oil grooves has a slanted bottom in which the depth of the groove is gradually decreased from the inner circumferential part to the outer circumferential part of the thrust bearing.

US-A-5554015 discloses a lubricating arrangement for a refrigeration compressor thrust bearing assembly. A separate thrust bearing device is mounted on the top of a bearing hub, and takes the form of a washer. Grooved channels extend radially across the lower surface of the thrust bearing device and have a uniform cross-sectional area along their length.

An aim of embodiments of the present invention is to provide a main shaft bearing lubricating apparatus for a sealing-type reciprocating compressor which sufficiently provides a lubricating oil, transmitted to a main shaft bearing, to an upper surface of the main shaft bearing contacting a thrust washer, and makes a lubricating friction between the thrust washer and the main shaft bearing, thereby preventing a loss and abnormal noise due to a metallic friction.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

The definition of the term "grooves" used throughout the present application is: a long narrow channel in a surface, i.e. the length of the channel being substantially greater then its width.

The terms "intake point" and "outlet point" used throughout the present application refer to points lying at the centre of the intake and outlet faces respectively.

According to a first aspect of the invention there is provided a main shaft bearing for a sealing-type reciprocating compressor, said main shaft bearing comprising: a plurality of lubricating grooves formed on a front section of the main shaft bearing, each groove extending from an intake face disposed at a radially inner periphery of the front section to an outlet face disposed at a radially outer periphery thereof; wherein each lubricating groove is formed such that an outlet point of the outlet face lying on a first radius of the front section is disposed at a different position by a given angle (θ) in a rotating direction of the main shaft bearing with respect to an intake point of the intake face lying on a second radius of the front section.

Each lubricating groove may form a curved shape. Alternatively, the groove may be a straight one, making a bend in the middle.

Preferably, an outlet face of the lubricating groove is smaller than an intake face in unit area. The lubricating groove may become gradually lower from the outlet face to the intake face.

Preferably, a bottom of the lubricating groove is formed in tiers from the intake face to the outlet face.

Preferably, the compressor has a rotor provided on the rotary shaft and rotating about the rotary shaft with respect to a main shaft bearing with a thrust washer between, and a reciprocating piston connected to one front end of the rotary shaft through a crank.

The lubricating grooves may be additionally provided to the bottom surface of the thrust washer.

It is to be understood that both the foregoing general description and the following detailed description are exemplary and explanatory and are intended to provide further explanation of the invention as claimed.

For a better understanding of the invention, and to show how embodiments of the same may be carried into effect, reference will now be made, by way of example, to the accompanying diagrammatic drawings in which:
Figure 1 is a perspective view of a main shaft bearing's upper section having a plurality of curved lubricating grooves in accordance with an embodiment of the present invention;
Figure 2 is a perspective view of lubricating grooves in accordance with a first preferred embodiment of the present invention;
Figure 3 is a perspective view of lubricating grooves in accordance with a second preferred embodiment of the present invention;

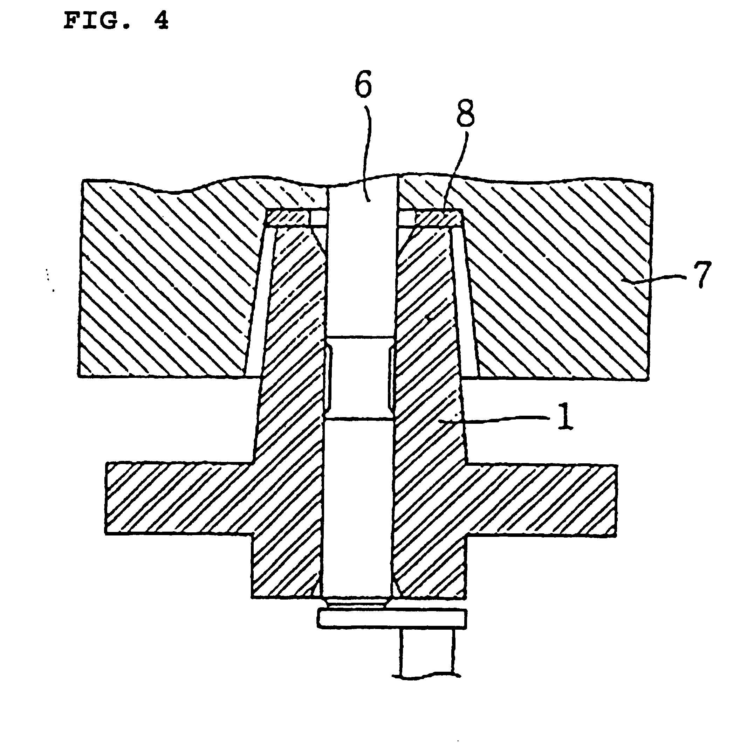

Figure 4 is a partially enlarged sectional view of a rotor, a thrust washer, and a main shaft bearing for a reciprocating compressor;
Figure 5 is a sectional view of the internal structure of a conventional sealing-type reciprocating compressor;
Figure 6 is a perspective view of a main shaft bearing's upper section with lubricating grooves for the conventional sealing-type reciprocating compressor; and
Figure 7 is a perspective view of the structure of the lubricating grooves provided to the main shaft bearing of Figure 6.

Reference will now be made in detail to the preferred embodiments of the present invention, examples of which are illustrated in the accompanying drawings.

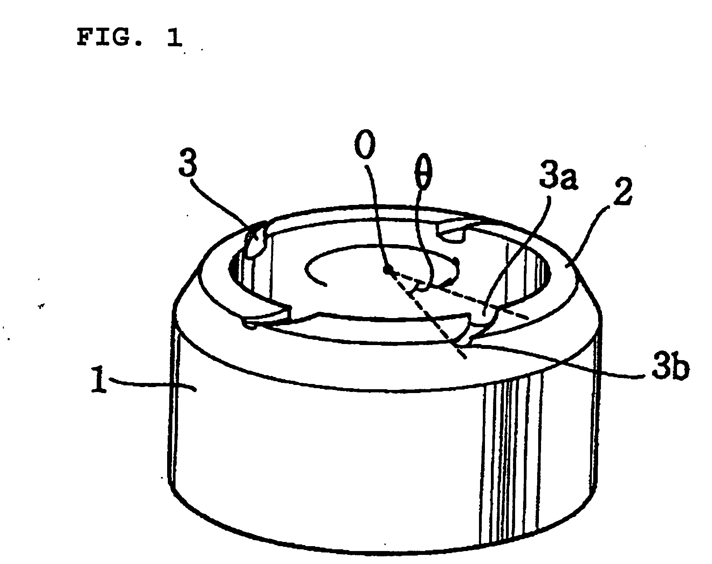

Figure 1 depicts a plurality of lubricating grooves 3 formed to a given curvature in a rotating direction of a rotary shaft on a main shaft bearing 1's front section 2. More specifically, each groove 3 has an intake point 3a and an outlet point 3b disposed on different positions by a given angle θ with respect to main shaft bearing 1's center of rotation O to form a curved shape on a plane.

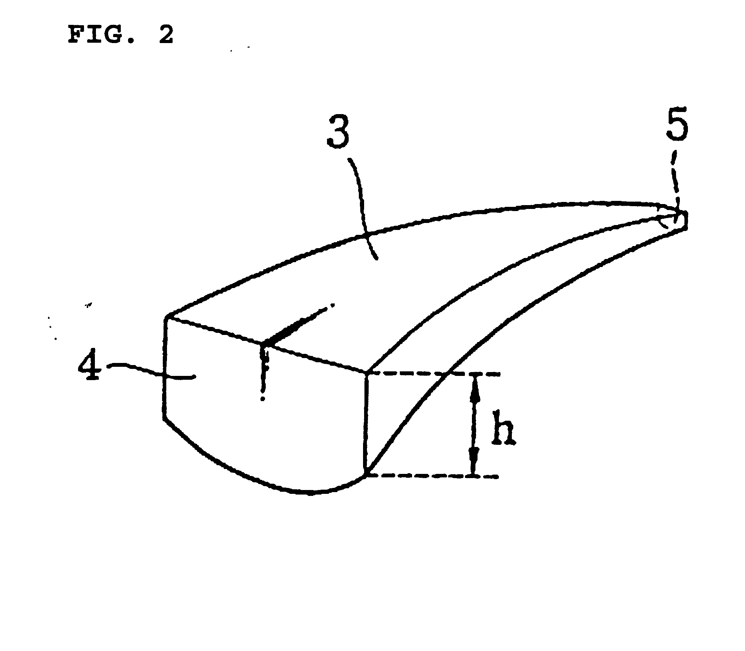

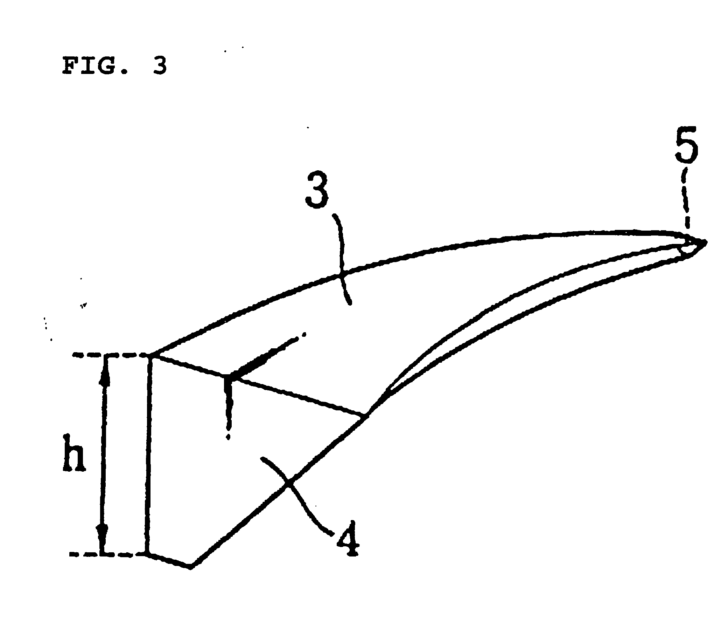

A line linking the intake and outlet points of lubricating groove 3 to each other may form a curved shape, as shown in Figures 2 and 3.

It is preferable that regarding lubricating groove 3's sectional shape, outlet face 5 is smaller than intake face 4 in unit area. For example, as depicted in Figure 2 or 3, lubricating groove 3's sectional area may narrow gradually. In addition, regarding depth h of lubricating groove 3, outlet face 5 may be lower than intake face 4, so the outlet of lubricating groove 3 is smaller than the intake in unit area. Main shaft bearing 1 provided with such lubricating grooves 3 supports a rotary shaft 6, as shown in Figure 1, and a lubricating oil, introduced through rotary shaft 6 from a lubricating oil storage shell by a centrifugal suction force produced by the rotation of rotary shaft 6, is elevated along main shaft bearing 1's inside and then reaches its front section 2.

The lubricating oil, reaching main shaft bearing 1's front section 2, receives the centrifugal force produced by the rotating force of thrust washer 8 interposed between rotor 7 and main shaft bearing 1, and flows to the outside in the direction of the semi-diameter through lubricating grooves 3 formed on main shaft bearing 1's front section 2.

As described above, since the unit area of outlet face 5 is smaller than that of the intake face 4, the amount of the lubricating oil introduced through intake face 4 of lubricating groove 3 is larger than that of the lubricating oil that flows out through outlet face 5.

Therefore, because the lubricating oil continuously flows into intake face 4 of lubricating grooves 3 while the flowing speed of the lubricating oil in lubricating grooves 3 becomes low, the lubricating oil stagnant in lubricating grooves 3 overflows front section 2 of main shaft bearing 1, and is introduced between main shaft bearing 1 and thrust washer 8, thus forming a lubricating film.

The lubricating friction is created between thrust washer 8 and main shaft bearing 1 sufficiently provided with the lubricating oil whereby a metallic friction is not produced to minimize the frictional force and noises due to the metallic friction.

In order to make the lubricating oil in lubricating grooves 3 slowly flow, each groove 3's section may be either symmetric (as shown in Figure 2), or asymmetric (as shown in Figure 3). It is preferable that the contact surface between main shaft bearing 1's front section 2 and thrust washer 8 is processed enough to make the lubricating oil be evenly distributed.

Lubricating grooves 3 may be additionally formed on thrust washer 8's bottom surface so that the function of lubricating grooves 3 can be provided to thrust washer 8 thereby enhancing the lubricating characteristics.

As described above, the lubricating oil is sufficiently provided to the main shaft bearing and the thrust washer, and the lubricating friction is created between the main bearing and the thrust washer whereby a big frictional resistance is not produced and the noise problem due to the metallic friction is prevented to enhance the quality of the compressor.

Although a few preferred embodiments have been shown and described, it will be appreciated by those skilled in the art that various changes and modifications might be made without departing from the scope of the invention, as defined in the appended claims (interpreted with the help of the description and the drawings).

## Claims

1. A main shaft bearing for a sealing-type reciprocating compressor, said main shaft bearing comprising:
a plurality of lubricating grooves (3) formed on a front section (2) of the main shaft bearing (1), each groove (3) extending from an intake face (4) disposed at a radially inner periphery of the front section (2) to an outlet face (5) disposed at a radially outer periphery thereof;
wherein each lubricating groove (3) is formed such that an outlet point (3b) of the outlet face (5) lying on a first radius of the front section (2) is disposed at a different position by a given angle (θ) in a rotating direction of the main shaft bearing with respect to an intake point (3a) of the intake face (4) lying on a second radius of the front section (2).

2. A main shaft bearing lubricating apparatus for a sealing-type reciprocating compressor according to claim 1, wherein each lubricating groove (3) forms a curved shape.

3. A main shaft bearing lubricating apparatus for a sealing-type reciprocating compressor according to claim 1, wherein the lubricating groove (3) is a straight one, making a bend in the middle.

4. A main shaft bearing lubricating apparatus for a sealing-type reciprocating compressor according to one of the claims 1 to 3, wherein an outlet face (5) of the lubricating groove is smaller than an intake face (4) in unit area.

5. A main shaft bearing lubricating apparatus for a sealing-type reciprocating compressor according to claim 4, wherein the lubricating groove (3) becomes gradually lower from the outlet face (5) to the intake face (4).

6. A main shaft bearing lubricating apparatus for a sealing-type reciprocating compressor according to claim 4, wherein a bottom of the lubricating groove (3) is formed in tiers from the intake face (4) to the outlet face (5).

7. A main shaft having lubricating apparatus for a sealing-type reciprocating compressor according to any of claims 1 to 6, wherein the compressor has a rotor (7) provided on a rotary shaft (6) and rotating about the rotary shaft (6) with respect to the main shaft bearing (6) with a thrust washer (8) between, and a reciprocating piston connected to one front end of the rotary shaft (6) through a crank.

8. A main shaft bearing lubricating apparatus for a sealing-type reciprocating compressor according to claim 7 when dependent on claim 4, wherein the lubricating grooves (3) are additionally provided to the bottom surface of the thrust washer (8).

## Patentansprüche

1. Hauptwellenlager für einen gekapselten Hubkolbenkompressor, wobei das Hauptwellenlager umfasst:
eine Vielzahl von Schmiernuten (3), die an einem vorderen Abschnitt (2) des Hauptwellenlagers (1) ausgebildet sind, wobei jede Nut (3) von einer Einlassfläche (4), die an einem radial innen liegenden Rand des vorderen Abschnitts (2) angeordnet ist, zu einer Auslassfläche (5) erstreckt, die an einem radial außen liegenden Rand desselben angeordnet ist;
wobei jede Schmiernut (3) so ausgebildet ist, dass ein Auslasspunkt (3b) der Auslassfläche (5), der an einem ersten Radius des vorderen Abschnitts (2) liegt, an einer Position angeordnet ist, die sich um einen bestimmten Winkel (θ) in einer Drehrichtung des Hauptwellenlagers in Bezug auf einen Einlasspunkt (3a) der Einlassfläche (4), der an einem zweiten Radius des vorderen Abschnitts (2) liegt, unterscheidet.

2. Hauptwellenlager-Schmiervorrichtung für einen gekapselten Hubkolbenkompressor nach Anspruch 1, wobei jede Schmiernut (3) eine gekrümmte Form bildet.

3. Hauptwellenlager-Schmiervorrichtung für einen gekapselten Hubkolben-Kompressor nach Anspruch 1, wobei die Schmiernut (3) gerade ist und in der Mitte eine Biegung durchläuft.

4. Hauptwellenlager-Schmiervorrichtung für einen gekapselten Hubkolben-Kompressor nach einem der Ansprüche 1 bis 3, wobei eine Auslassfläche (5) der Schmiernut bezüglich einer Flächeneinheit kleiner ist als eine Einlassfläche (4).

5. Hauptwellenlager-Schmiervorrichtung für einen gekapselten Hubkolben-Kompressor nach Anspruch 4, wobei die Schmiernut (3) von der Auslassfläche (5) zur Einlassfläche (4) hin allmählich niedriger wird.

6. Hauptwellenlager-Schmiervorrichtung für einen gekapselten Hubkolben-Kompressor nach Anspruch 4, wobei ein Boden der Schmiernut (3) in Stufen von der Einlassfläche (4) zur Auslassfläche (5) hin ausgebildet ist.

7. Hauptwellenlager-Schmiervorrichtung für einen gekapselten Hubkolben-Kompressor nach einem der Ansprüche 1 bis 6, wobei der Kompressor einen Rotor (7), der an einer Drehwelle (6) vorhanden ist und sich um die Drehwelle (6) in Bezug auf das Hauptwellenlager (6) mit einer Druckscheibe (8) dazwischen dreht, und einen Hubkolben aufweist, der mit einem vorderen Ende der Drehwelle (6) über eine Kurbel verbunden ist.

8. Hauptwellenlager-Schmiervorrichtung für einen gekapselten Hubkolben-Kompressor nach Anspruch 7, wenn abhängig von Anspruch 4, wobei die Schmiernuten (3) zusätzlich an der Bodenfläche der Druckscheibe (8) vorhanden sind.

## Revendications

1. Palier d'arbre principal pour un compresseur à piston de type étanche, ledit palier d'arbre principal comprenant:
plusieurs gorges de lubrification (3) formées sur une partie avant (2) du palier d'arbre principal (1), chaque gorge (3) s'étendant d'une face d'entrée (4) disposée au niveau d'une périphérie radialement intérieure de la partie avant (2) jusqu'à une face de sortie (5) disposée au niveau d'une périphérie radialement extérieure de celle-ci;
chaque gorge de lubrification (3) étant formée de façon qu'un point de sortie (3b) de la face de sortie (5) qui s'étend sur un premier rayon de la partie avant (2) soit disposé au niveau d'une position qui diffère d'un angle donné (θ) dans une direction de rotation du palier d'arbre principal par rapport à un point d'entrée (3a) de la face d'entrée (4) qui s'étend sur un second rayon de la partie avant (2).

2. Dispositif de lubrification de palier d'arbre principal pour un compresseur à piston de type étanche, selon la revendication 1, dans lequel chaque gorge de lubrification (3) définit une configuration courbe.

3. Dispositif de lubrification de palier d'arbre principal pour un compresseur à piston de type étanche, selon la revendication 1, dans lequel la gorge de lubrification (3) est une gorge droite qui forme un coude dans le milieu.

4. Dispositif de lubrification de palier d'arbre principal pour un compresseur à piston de type étanche, selon l'une quelconque des revendications 1 à 3, dans lequel une face de sortie (5) de la gorge de lubrification est plus petite qu'une face d'entrée (4) en unité de surface.

5. Dispositif de lubrification de palier d'arbre principal pour un compresseur à piston de type étanche, selon la revendication 4, dans lequel la gorge de lubrification (3) va progressivement en descendant de la face de sortie (5) à la face d'entrée (4).

6. Dispositif de lubrification de palier d'arbre principal pour un compresseur à piston de type étanche, selon la revendication 4, dans lequel un fond de la gorge de lubrification (3) est formée en gradins de la face d'entrée (4) à la face de sortie (5).

7. Dispositif de lubrification de palier d'arbre principal pour un compresseur à piston de type étanche, selon l'une quelconque des revendications 1 à 6, dans lequel le compresseur comporte un rotor (7) disposé sur un arbre rotatif (6) et tournant autour de l'arbre rotatif (6) par rapport au palier d'arbre principal (6), une rondelle de butée (8) étant interposée entre eux, et un piston alternatif relié à une extrémité avant de l'arbre rotatif (6) par l'intermédiaire d'une manivelle.

8. Dispositif de lubrification de palier d'arbre principal pour un compresseur à piston de type étanche, selon la revendication 7 lorsque celle-ci est dépendante de la revendication 4, dans lequel les gorges de lubrification (3) sont en outre prévues sur la surface inférieure de la rondelle de butée (8).
